# EUROPEAN PATENT SPECIFICATION

(11) **EP 3 456 988 B1**
(45) Date of publication and mention of the grant of the patent: **03.11.2021**
(21) Application number: 18171388.4
(22) Date of filing: 09.05.2018
(51) Int. Cl.: F16B 12/10, A47B 47/00, F16B 12/46, A47B 47/04, A47B 88/90, F16B 12/24

(54) **A CONNECTION SYSTEM AND CONNECTORS FOR MECHANICAL INTERCONNECTION OF PANELS**
VERBINDUNGSSYSTEM UND VERBINDUNGEN FÜR DIE MECHANISCHE VERBINDUNG VON PANEELEN
SYSTEME DE RACCORDEMENT ET CONNECTEURS POUR L'INTERCONNEXION MECANIQUE DE PANNEAUX

(30) Priority: 13.09.2017 SE 1700209
(43) Date of publication of application: 20.03.2019
(73) Proprietor: Ackurat Industriplast AB, 363 44 Lammhult (SE)
(72) Inventor: Lundgren, Alvar, 41747 Göteborg (SE)
(74) Representative: Bergenstråhle & Partners AB

(56) References cited:
- DE-U1- 20 021 780
- US-A- 5 657 604
- US-A- 6 148 569
- US-A1- 2012 279 161
- US-A1- 2014 041 332

## Description

### Technical field

The invention considers a connections system and connectors for interconnecting and interlocking of panels, preferably perpendicular to each other. The invention is preferably used during assembly of furniture components, to obtain furniture products such as bookshelves, wardrobes, drawers or other box-like furniture or to interconnect furniture products. The invention is also applicable in a number of other applications where a robust and easy system is desirable for mechanical connection of plates, panels, etc. to each other. With the system it is possible to connect panels perpendicular, in an angle or parallel to each other as well as in line after one another to form a larger panel.

### Background art

It is well known to connect for example parquet, particle boards, plywood etc. with different types of joint such as snap joint, tongue and groove joints and the like. For furniture components, kitchen cabinets wardrobes etc., it is also well known to use different kinds of mechanical interlocking systems for interconnecting flat, wood-based panels to each other, to enable flat transporting packages. Then the user may assemble the components on site to a complete product.

A known system used to interconnect 45° beveled corners is that in bore holes at the ends of the wood-based panels insert angled drawbars which shall cooperate with a twistable fitting, and with use of a special tool tighten the fitting so that a tight joint occurs between the panels. The system requires a lot of components and the fitting is visible inside the cabinet. Additionally, it takes a long time to mount a cabinet/furniture frame in this way. The system only requires standard drills which is an advantage and the interconnection can be reopened and also reconnected which is an advantage.

Another solution is a bracket with cord-like shape which by use of a special milling machine is fixed to the panel by milling perpendicular to the connection side. The machine makes a cord-shaped recess with an undercut so that the bracket gets fixed to the panel. Through a smaller bore hole into the fitting body, one can use a hexagon tool to maneuver a locking tongue that locks in a corresponding cord-shaped fitting with an eccentric force in the opposite panel. The bracket requires special tools for application and the system contains many parts and therefore becomes exclusive. The joint is both lockable and openable which is an advantage.

A similar cord-shaped bracket with a plastic fastener is known, and which bracket is fixed by milling to the panel with a similar machine like in the previous presented system. The locking force in the bracket is not sufficient to independently take care of all forces why the fitting only may be used to fix a glue joint, which permanently locks the panels to each other. The bracket requires a special machine and the because of glue the joint cannot be reopened.

Another solution is where the connection surfaces of the panels are milled to a tongue, and on the opposite panel, a groove. In addition, another groove is cut-out for a resilient locking tongue. Here the panels are joined together with a light pressure without tools during assembly. The method of putting together parts with this design are very time-saving. However, the method requires the purchase of expensive special tools and is suitable for hard materials. The method is not appropriate at MDF-boards since the connection is very fragile in MDF. For harder materials the joint can be opened and closed again.

One example of a mechanical locking system for connecting furniture panels perpendicular to each other is presented in EP 2 705 259 B1. According to this solution, panels are connected to each other by insertion of a rigid part of a gable of the first panel into a groove of the second panel, and the groove further comprising an inclined insertion groove, for accommodating a separate, flexible locking tongue. The locking tongue is resiliently arranged into the insertion groove and is put into the groove during production. Thus, the mechanical connection is a snap-connection for fast and easy connection of panels perpendicular to each other. The patent discloses a number of different designs of the gables and grooves, i.e. the fixed gable and groove, and also give examples of different tongue designs, with flexible inner parts and rigid outer parts. The solution gives the opportunity to insert the locking tongue by a linear displacement into the insertion groove. This solution has a number of disadvantages. Firstly, some of the presented solutions discloses complicated design of matching gables and grooves, which means a great importance of tolerances when producing the panels. Secondly, the flexible tongue may fall out from the insertion groove. Further, the panels may indeed be snapped together, but it is not possible to split the panels again after the connection. If a piece of furniture is to be dismounted the solution cannot handle this, which may be a problem if the owner of the furniture is about to move and needs to dismount the entire or parts of the connected panels of the furniture.

Another example of a mechanical locking system for connecting furniture panels perpendicular to each other is presented in US 6,148,569. According to this solution, panels are connected to each other by first drive one fastening device into a hole in one panel, wherein the fastening device is retained therein by toothed surface portions, which grips the walls of the hole in the panel. A protruding end part of the fastening device is inserted in a hole in the other panel, and by means of a wrench, a slide forces a U-shaped spring to spread its spring arms from a resting position to a spread position (working position) and engage with walls of the hole. This is a quite rigid solution which also provides a disassembly of the panels, but it is a complicated solution with a lot of details of the fastening device and the toothed surface portions are not totally safe since it is only a friction force between the wall of the hole and the fastening device that holds the panels together. Depending of the material of the panels, this locking system is not totally safe.

### Summary of the invention

It is an object of the invention to address at least some of the problems and issues outlined above. It is possible to achieve these objects and others by a connector and a connection system as defined in the attached independent claims.

According to an aspect of the invention, a connector for mechanical interconnection of a first panel to a second panel is disclosed. The connector is preferably for use when interconnecting furniture panels to a complete furniture. The connector comprises a first guide heel adapted for insertion into a first guiding recess of the first panel, which first guiding recess has a first guiding direction. Further, the connector comprises a second guide heel adapted for insertion into a second guiding recess of the second panel, wherein the second guide heel has a second guiding direction. The connector further comprises a first resiliently arranged locking lug, adapted for insertion into a first locking recess, which locking recess is arranged in the first guiding recess. The first locking lug has a first locking direction which differs from the first guiding direction of the first guiding recess. A second resiliently arranged locking lug, which is adapted for insertion into a second locking recess arranged in the second guiding recess, is also comprised at the connector. The second locking lug has a second locking direction which differs from the second guiding direction of the second guiding recess. To provide a locking of the connector in the locking lug direction the first locking lug protrudes from a surface of the first guide heel, in an unloaded condition, which is an opposite condition to a depressed condition of the resiliently arranged locking lug, and the second locking lug protrudes from a surface of the second guide heel, in an unloaded condition, which is an opposite condition to a depressed condition of the resiliently arranged locking lug. And further the respective locking lug is resiliently arranged in the connector and is depressible into the connector when depressed, such as the locking lug does not protrude from the surface. The meaning of "unloaded" condition referred to above, is the opposite of the depressed condition of the resiliently arranged locking lug, that is when the resiliently arranged locking lug is not depressed.

According to a first option of the aspect, at least one of the locking lugs of the connector is arranged at a resilient tongue arranged in a cut-out in at least one of the first or the second guide heels. That is, the guide heels are fixed, and at least one of them disclose a cut-out, and the resilient tongue is attached with one end in the guide heel and have the other end free in the cut-out. This means that the flexible tongue with the locking lug can flex relative to the fixed guide heel, preferably inwards. This means that the connector may be snapped at least into one of the locking grooves of the panels and also that the panels may be interlocked with a snap-connection. For example, the connector may be inserted from the side into the guiding recess and displaced along the recess to a wanted position or be snapped to the panel by inserting the guide heel transverse into the guiding recess and then snap-lock into the locking recess by pressing the connector into place, since the resilient locking lug flexes relative to the guide heel. Then, the second panel may be snapped to the first panel by the interlocking snap-connection in the same manner.

According to a second option of the aspect, the first and second locking lugs of the connector are arranged at respective ends of a common u-shaped connecting element of the connector. The u-shaped connecting element is flexibly arranged to the connector between ends of the first guide heel and the second guide heels. By such an arrangement both locking lugs are resiliently arranged at the connector both by that the flexible attachment to the guide heels and also that the u-shape itself provides a certain flexibility between "the legs" of the U of the connecting element.

According to an embodiment, an angle between the first and second guide heels of the connector are between 60 - 120°, preferably near 90°. For a corner, preferably a "near perpendicular" corner, this is a robust solution where the first guide heel corresponding to the direction of the guiding recess of the first panel, and the second guide heel corresponding to the direction of the guiding recess of the second panel. The fixed guide heels and the locking lugs with a different protruding direction compared to the direction of the respective guide heel provides the robust interconnection between the panels when arranged with an angle of 60 - 120°, preferably near 90°, between the panels.

According to an alternative embodiment, an angle between the first and second guide heels are between 150 - 210°, preferably near 180°. This option is also applicable for "near perpendicular" interconnections, especially where the guiding recesses are arranged at a gable of one panel and at main plane of the other panel. But it is also applicable for interconnections where the panels are in line with each other, for example to connect small panels to a larger panel or the like. The solution is robust since the locking lugs protrudes in a deviating direction compared to respective the guide heel surface as for all earlier mentioned embodiments.

According to an aspect of the invention, a robust, quick and easy handled connection system for mechanical interconnection of panels is disclosed. The connections system is preferably for use when interconnecting furniture panels to a complete furniture. The connection system comprises a first panel having a main plane and a gable, and the first panel comprises a first guiding recess which has a first guiding direction. The first guiding recess comprises a first locking recess with a first locking direction which differs from the first guiding direction. Further, the connection system comprises a second panel having a main plane and a gable, and the second panel comprises a second guiding recess which has a second guiding direction. The second guiding recess comprises a second locking recess with a second locking direction which differs from the second guiding direction. To mechanically interconnect the first panel to the second panel, the connection system further comprises a connector as described above.

Such an arrangement is very well adapted for interconnecting panels in a cost-efficient, quick and well-functioning way compared to prior art solutions. Compared to prior art solutions, the inventive system connects panels without the need of any tool - instead, the panels may be clicked or snapped together. Further, the system provides a strong mechanical connection between the panels since the connector comprises fixed guiding heels corresponding to respective guiding recesses of the panels, and also locking lugs, protruding from respective guide heel in a different direction compared to the guide heel, and corresponding to the respective locking recesses of the panels. The guiding recess of respective panel may be in the form of a long groove arranged at the gable or on the main plane of the panel, alternatively be in the form of one or several short groove/grooves with an opening for the initial insertion of the connector into the recess. The connector may then be displaced with a linear motion into the guiding recess. The connector may be inserted into the recesses of both panels and then displaced with a linear motion into the recesses for interconnection of the panels. Another option, since the locking lugs are resiliently arranged, is to insert the connector into the recess of one of the panels and then snap on the second panel, which is possible because of the resilient arranged locking lug. Another advantage is that the panels can be disconnected if a tool is inserted into the locking recess of the resilient locking lug, which tool decompresses the resilient locking lug into the connector. Thereby, the panels may be taken apart, since the locking function in one direction ends in a similar way a door locking mechanism for example. Compared to prior art solutions, the inventive system provides a strong and quick interconnection of the panels with no need of separate tools but the panels may also be disconnected with a tools if necessary.

As another, not claimed option, the resiliently arranged locking lug of the connector is a separate part, detachably arranged in a chamber of the connector. The advantage with such a solution is the production of the parts. For example, the connector itself may be produced by injection molded plastic, where the connector "housing" so to speak accommodates the chamber arranged for receiving the separate resilient locking lug. The locking lug is advantageously produced as a separate part because it is easier to produce spring means connected to locking parts and insert into the chamber of the connector. Preferably, some kind of stop is arranged at the connector/locking lug to prevent the locking lug from falling out of the chamber. The stop may be designed as a protruding heel arranged at the opening of the chamber with a corresponding groove arranged at the locking lug.

As another, not claimed option, the resiliently arranged locking lug of the connector is a spring bar, arranged with at least one spring element. The spring bar preferably is an elongate spring bar, with one locking part on which at least one, but preferably two spring elements are attached. The spring elements are facing a bottom of the chamber, and the locking part is the part which, in an unloaded condition, protruding from the surface of the guide heel where the locking lug is arranged. By that it looks like and works like a resilient door locking mechanism.

As another, not claimed option, the first locking lug of the connector is a fixed lug, fixedly arranged with the connector. This option is applicable if one firstly assembles the connector from the side into the first guiding recess and displaces it along the recess to the correct position (i.e. to fit with the complete connector inside the recess) and secondly uses the snap connection while mounting the second panel to the first panel. Thereby, the first locking lug, and thus the locking function of the first locking lug is really robust, and the connector fits tight into the guiding recess as well as the locking recess of the first panel. And still, a quick an d easy snap-connection is maintained by the second locking lug being resilient.

Other options could be that the first panel comprises two similar first guiding recesses at a respective gable, and also the second panel comprises two similar second guiding recesses at a respective gable. This means that the respective panel has the same type of guiding recess with the same type of locking recess at least at two of the gables. For example, a normal panel has four gables where normally two opposite gables have exactly the same recess design which is preferred of production reasons and cost. The angle between respective gable and the main plane is preferably 45°, or at least near 45°, which means that the interconnecting link between the panels are near 45° and the angle between the panels are 90°. By that the corner of two interconnected panels are 90° and is a smooth a nice-looking bevel corner which often is preferred when interconnecting for example furniture.

Further options could also be that the first panel comprises two similar guiding recesses at respective gable and the second panel comprises two similar guiding recesses near respective ends of the main plane. It could also be the opposite, that the first panel has the recesses at the main plane and the second has the recesses at the gables. In such a way, the gable of the one of the panels meets the main plane of the other panel, and the angle of the gables relative to the main plane preferably are 90°, or at least near 90°. By that the corner of two interconnected panels are 90° and is a smooth a nice-looking corner which often is preferred when interconnecting for example furniture.

And yet a further option could be that at least one of the first or second panel comprising at least one recess at the plane at a distance from the gables. That is to provide an interconnection which does not form a corner, but for example an interconnection of a dividing panel, such as a shelf in a bookshelf or the like.

Further possible features and benefits of this solution will become apparent from the detailed description below.

### Brief description of drawings

The solution will now be described in more detail by means of exemplary embodiments and with reference to the accompanying drawings, in which:
Fig. 1 is showing a section through panels with 45° gables and with recesses at the gables adapted for a first type of connector.
Fig. 2 is showing a section through panels with 90° gables and with recesses at the gables and main planes adapted for a second type of connector.
Fig. 3 is a perspective view of a first type of connector with one resilient locking lug. The connector is for use with the panels of Fig.1, and the resilient locking lug is shown outside the connector and also fitted in the connector.
Fig. 4 is a perspective view of the panels of Fig.1 with the first type of connectors of Fig. 3, assembled into recesses of one panel, and another panel of same type ready for interconnection with the panel.
Fig. 5 is a perspective view of a second type of connector with one resilient locking lug. The connector is for use with the panels of Fig.2, and the resilient locking lug is shown outside the connector and also fitted in the connector.
Fig. 6 is a perspective view of the panels of Fig.2 with the second type of connectors of Fig. 5, assembled into recesses of one panel with the recesses arranged on a main plane of the panel. Another panel, with recesses of same type as for the first panel but arranged on the gables, is ready for interconnection with the panel.
Fig. 7 shows three perspective views of a third type of connector with four resilient locking lugs, each arranged at flexible tounges of the connector.
Fig. 8 is a perspective view of panels adapted for the third type of connectors of Fig. 7, where the third type of connectors are assembled into recesses of one panel, and another panel of same type ready for interconnection with the panel.
Fig. 9 shows three perspective views and one section of a fourth type of connector with four resilient locking lugs, each resiliently arranged at respective ends of a common u-shaped connecting element of the connector.
Fig. 10 is a perspective view of panels adapted for the fourth type of connectors of Fig. 9, where the fourth type of connectors are assembled into recesses of one panel with the recesses arranged on a main plane of the panel. Another panel, with recesses of same type as for the first panel but arranged on the gables, is ready for interconnection with the panel.

### Detailed description

Briefly described, a system and a connector are provided that gives a cost-efficient and well-functioning solution for interlocking of panels.

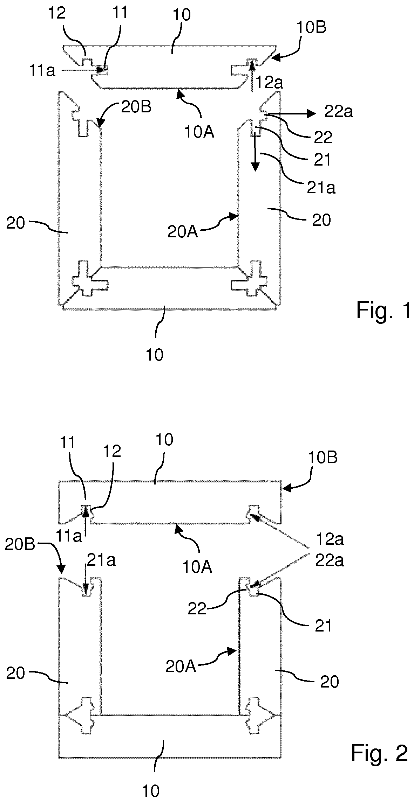

Fig. 1 shows a section through first panels 10 and second panels 20, the first panel 10 having a main plane 10A and gables 10B and the second panel having a main plane 20A and gables 20B. The respective gable 10B, 20B inclines near 45° degrees relative to respective main plane 10A, 20A, such that a 45° connection plane is formed when the first panel 10 and the second panel 20 is connected at their gables 10B, 20B. In this way the connection plane is hidden which may be a wanted design option depending on the demands on the application. In the preferred embodiment each gable 10B, 20B, where an interconnection is wanted between the panels, comprises similar recesses as will be explained below. The description below is described in singular (not plural) to make the description clearer.

The gable 10B of the first panel 10 comprises a first guiding recess 11 with a first guiding direction 11a. Additionally, the first guiding recess 11 comprises a first locking recess 12 with a first locking direction 12a, which differs from the first guiding direction 11a. In the figure there is a 90° angle between the directions, which is preferred for this embodiment, but it is not necessary to have that angle, but of course a difference between the directions 11a, 12a is needed. In the similar way, the gable 20B of the second panel 20 comprises a second guiding recess 21 with a second guiding direction 21a, and additionally, the second guiding recess 21 comprises a second locking recess 22 with a second locking direction 22a, which differs from the second guiding direction 12a. The figure shows a section of four panels 10, 20, all with similar design of the respective recess 11, 12, 21, 22.

Fig. 2 shows a section through the first panels 10 and the second panels 20, with their main planes 10A, 20A and gables 10B, 20B. A difference compared to Fig.1 is that a plane of the respective gable 10B, 20B is perpendicular relative to the respective main plane 10A, 20A. This means that the first panel 10 comprises two similar guiding recesses 11 near respective ends of the main plane 10A, and the second panel 20 comprises two similar guiding recesses 21 at respective gable 20B. The angle of the respective gable 10B, 20B relative to the respective main plane 10A, 20A is as said preferably 90°, or at least near 90°.

Near the end of the main plane 10A of the first panel 10, the first guiding recess 11 is arranged with its first guiding direction 11a. Additionally, the first guiding recess 11 comprises the first locking recess 12 with the first locking direction 12a, which differs from the first guiding direction 11a. In the embodiment of Fig.2, the angle between the guiding direction 11a and the locking direction 12a is not 90° as for the embodiment of Fig. 1. In this preferred embodiment, the angle is around 60°. The second panel 20 comprises a similar recess as for the first panel 10, but the second guiding recess 21 with its second guiding direction 21a and the second locking recess 22 with its second locking direction 22a are arranged at the gable 20B of the second panel 20 instead of being arranged at the main plane 20A. The figure shows a section of four panels 10, 20, all with similar design of the recesses 11, 12, 21, 22.

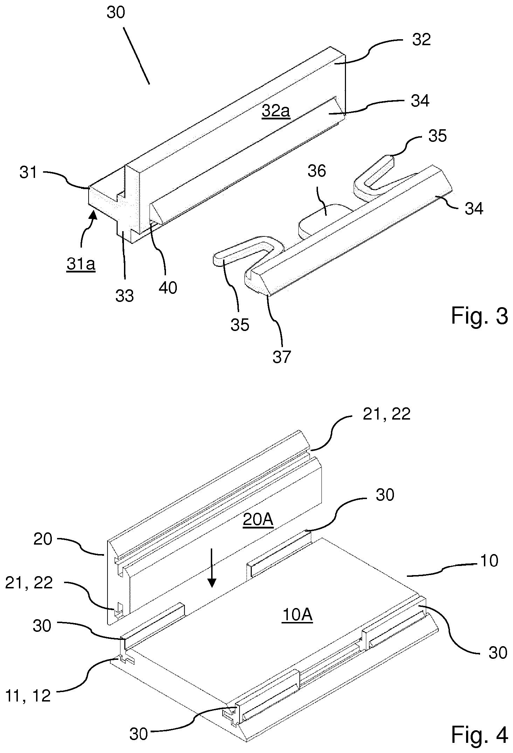

Fig. 3 shows a perspective view of a first type of connector 30 with a first locking lug 33 is a fixed locking lug, and a second locking lug 34 is a resilient locking lug. The connector 30 is for use with the panels of Fig.1, and the resilient second locking lug 34 is shown both outside the connector 30 and also fitted in the connector 30, to clearly show that the resilient first locking lug 34 is designed as a separate part of the connector 30. The connector 30 is according to this embodiment designed with an L-shape, with a first guide heel 31 and a second guide heel 32 which guide heels 3,1, 32 constituting the L-shape by protruding from a corner part with a 90° angle between the first and the second guide heel 31, 32. The first guide heel 31 is arranged to fit in the first guiding recess 11 of the first panel 10, and the second guide heel 32 is arranged to fit in the second guiding recess 21 of the second panel 20. The fixed first locking lug 33 protrudes from a surface 31a of the first guide heel 31 and is arranged to fit into the first locking recess 12 of the first panel 10. The resilient second locking lug 34 is detachably and resiliently arranged into a chamber 40 of the connector 30, and is depressible into the connector 30 / chamber 40 such as, when depressed, the second locking lug 34 does not protrude from the surface 32a of the second guide heel 32. And opposite, the second locking lug 34 protrudes from the surface 32a of the second guide heel 32 when unloaded. As can be seen from the right figure, the second locking lug 34 is designed more or less like a door lock, and is preferred to be an elongate spring bar with two spring elements 35 arranged at respective ends of the elongate spring bar. The spring elements 35 may have different designs but must have a spring function to make sure that the second locking lug 34 springs out from the chamber 40. To prevent the resilient second locking lug 34 from falling out, a stop arranged at the opening of the chamber (not visible) may cooperate with a corresponding groove 37 on the underside of the elongate spring bar part. Further, a guiding tongue 36 is arranged on the backside of the elongate part, facing the chamber 40, which guiding tongue 36 guides the movement of the second locking lug 34 inside the chamber 40, and thus prevents a possible twisting of the same. The elongate locking part of the second locking lug 34 is preferably chamfered to make a snap-connection easier when interconnecting the panels to each other.

Fig. 4 shows a perspective view of the panels of Fig.1 with the first type of connectors 30 according to the embodiment of Fig. 3, assembled into the first guiding recess 11 and into the first locking recess 12 of the first panel 10. The second panel 20 is ready for interconnection with the first panel 10 by snap-connection. The connectors of this first type, with a fixed first locking lug 33, must be inserted into the recesses 11, 12 by a linear displacement from the side. To interconnect the panels 10, 20, the second panel 20, with its second guiding recess 21 and second locking recess 22 is moved in direction of the arrow towards the first panel 10. The second guide heel 32 of the connector 30 will enter the second guiding recess 22, and when pushing the second panel 20 onto the connector 30, the resilient second locking lug 34 will be depressed into the chamber 40 of the connector 30. The second panel 20 is moved further in direction towards the first panel 10 to an end position, or near end position, where the second locking lug 34 will spring out and snap into the second locking recess 22. Thereby, the panels 10, 20 are locked together. It is also possible to insert a tool into the second locking recess 22 and depress the resilient locking lug 34 into the chamber 40 for disconnecting the panels 10, 20 from each other.

If the recesses 11, 12 were designed as short recesses with no free end, for example in the middle of the gable 10B, a start groove could be arranged adjacent to the recess to facilitate an insert from the side. This solution could be suitable for interconnecting panels which not constitutes a corner, for example connecting a shelf to a side in a bookshelf.

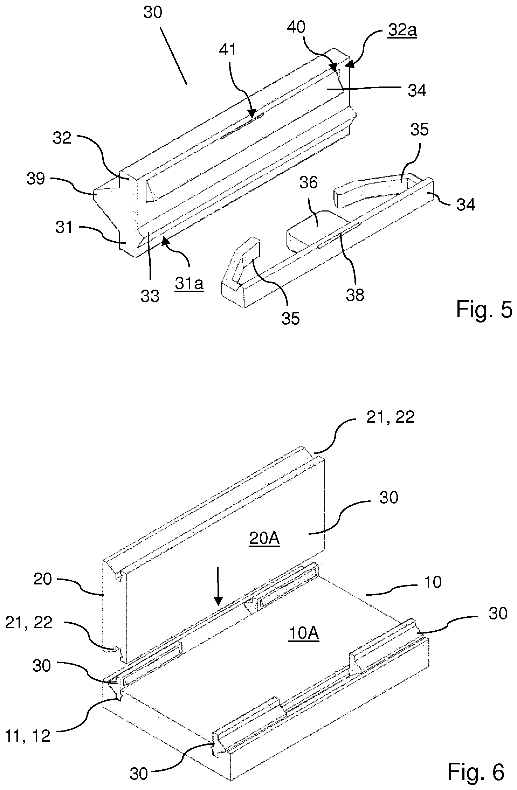

Fig. 5 shows a perspective view of a second type of connector 30 also with the first locking lug 33 arranged as a fixed locking lug as in the earlier described embodiment (first type of connector). And further, the second locking lug 34 is a resilient locking lug. The connector 30 is for use with the panels of Fig.2, and the resilient second locking lug 34 is shown both outside the connector 30 and also fitted in the connector 30, to clearly show that the resilient first locking lug 34 is designed as a separate part of the connector 30. The connector 30 is according to this embodiment designed with its guide heels arranged in line with each other in an I-shape, with the first guide heel 31 and the second guide heel 32 constituting the I-shape by protruding in two opposite directions with a 180° angle between the first and the second guide heel 31, 32. Added to this is also a third guide heel 39 arranged as a triangular form protruding from the I-shape in a perpendicular direction. The function of third guide heel 39 is both to support the direction of the connector 30 in the guiding recesses 11, 21 by cooperation with a chamfered part of the guiding recesses 11, 21 and also to provide room for the chamber 40 which will be explained below. The first guide heel 31 is arranged to fit in the first guiding recess 11 of the first panel 10, and the second guide heel 32 is arranged to fit in the second guiding recess 21 of the second panel 20. The fixed first locking lug 33 protrudes from a surface 31a of the first guide heel 31 and is arranged to fit into the first locking recess 12 of the first panel 10. The resilient second locking lug 34 is detachably and resiliently arranged into a chamber 40 of the connector 30 and is depressible into the connector 30 / chamber 40 such as, when depressed, the second locking lug 34 does not protrude from a surface 32a of the second guide heel 32. And opposite, the second locking lug 34 protrudes from the surface 32a of the second guide heel 32 when unloaded. In this embodiment the surface 31a of the first guide heel 31 and the surface 32a of the second guide heel 32 forming one common surface since the orientation of the surfaces are the same. As can be seen from the right figure, the second locking lug 34 is designed like a door lock and is preferred to be an elongate spring bar with two spring elements 35 arranged at respective ends of the elongate spring bar. The spring elements 35 have the function to make sure that the second locking lug 34 springs out from the chamber 40. To prevent the resilient second locking lug 34 from falling out, a stop 41 is arranged at the opening of the chamber 40, which stop 41 cooperates with a corresponding groove 37 on the upper side of the elongate spring bar part. Further, a guiding tongue 36 is arranged on the backside of the elongate part, facing the chamber 40, which guiding tongue 36 guides the movement of the second locking lug 34 inside the chamber 40. The elongate locking part of the second locking lug 34 is according to this embodiment not chamfered as the first type of connector of Fig.3. Instead, the chamber 40, in which the second locking lug 34 is arranged, is inclined such as the triangular third guide heel 39 incorporates the inclined chamber 40. By this design, the second locking lug 34 protrudes from the surface 32a with an angle to make the snap-connection easier in a similar way as for the first type of connector 30, presented in Fig. 3.

Fig. 6 shows a perspective view of the panels of Fig.2 with the second type of connectors 30 according to the embodiment of Fig. 5, assembled into the recesses 11, 12 of the first panel 10. The second panel 20 is ready for interconnection with the first panel 10 by snap-connection in a similar way as described in Fig. 4 with moving the second panel 20 towards the first panel 10 wherein the resilient second locking lug 34 will be depressed obliquely downwards into the chamber 40. Then, the second locking lug 34 will spring out and snap into the second locking recess 22. As in the foregoing described embodiments the panels 10, 20 are disconnectable from each other with a tool.

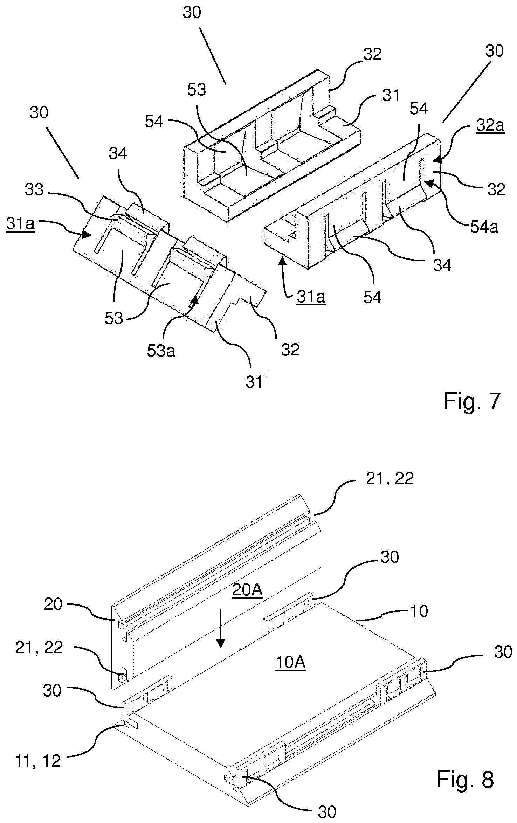

Fig. 7 shows a perspective view of a third type of connector 30 with all locking lugs 33, 34 arranged as resilient locking lugs. The connector 30 is for use with the panels of Fig.1. The connector 30 is according to this third embodiment designed with an L-shape, with the first guide heel 31 and the second guide heel constituting the L-shape with a 90° angle between the first and the second guide heel 31, 32. The first and second guide heels 31, 32 are arranged to fit in the respective guiding recesses 11, 21. The first locking lug 33 is actually two locking lugs 33, and the second locking lug 34 is actually two locking lugs 34. Each locking lug 33, 34 is arranged at a respective resilient tongue 53, 54, where each tongue is arranged in a respective cut-out 53a, 54a in the first and the second guide heels 31, 32. Each resilient tongue 53, 54 is attached with one end in the guide heel, preferably at a distal end of the guide heel, and have one opposite end arranged as a free in the cut-out. This means that the flexible tongue 53,54 with the locking lug 33, 34 can flex relative to the fixed guide heels 31, 32, preferably inwards, such as, when depressed, the locking lugs 33, 34 does not protrude from the surface 31a, 32a. And opposite, that the locking lugs 33, 34 protrudes from the surfaces 31a, 32a when unloaded. This means that the connector 30 may be snapped at least into one of the locking recesses 12, 22 of the panels 10, 20 and also that the panels may be interlocked with a snap-connection.

Fig. 8 shows a perspective view of the panels of Fig.1 with the third type of connectors 30 according to the embodiment of Fig. 7, assembled into the recesses 11, 12 of the first panel 10. The second panel 20 is ready for interconnection with the first panel 10 by snap-connection in a similar way as described in detail in Fig. 4. The advantage with having all locking lugs arranged as resilient locking lugs is that the connectors 30 may be snapped into position in also in the first panel 10, which means that the recesses 11, 12 do not need to have access to a free end for the assembly. When moving the second panel 20 towards the first panel 10, the resilient second locking lugs 34 will be depressed inwards such as the resilient locking lug 34 is fitted inside the outer periphery of the second guide heel 32. Then, the second locking lug 34 will spring out and snap into the second locking recess 22 in the same manner as other embodiments. As in the foregoing described embodiments the panels 10, 20 are disconnectable from each other with a tool.

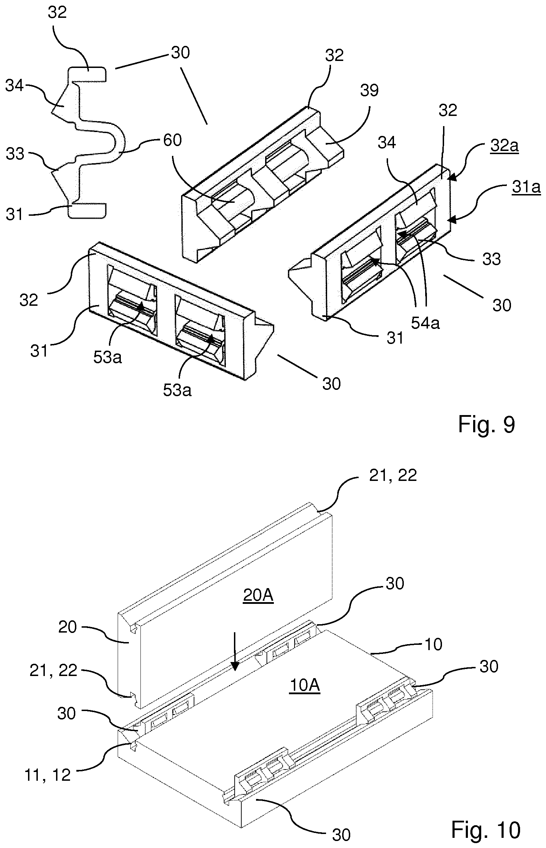

Fig. 9 shows views and a section of a fourth type of connector 30 with four resilient locking lugs 33, 34, each resiliently arranged at respective ends of two common u-shaped connecting elements 60 of the connector 30. The main shape of the connector 30 is very similar with the second type of connector 30, described in Fig. 5, with first and second guide heels 31, 32 arranged in line with each other and protruding in opposite directions with a 180° angle between them. And this embodiment also comprises the third guide heel 39 protruding like a triangular heel perpendicular relative the first and second guide heels 31, 32. The surface 31a of the first guide heel 31 and the surface32a of the second guide heel 32 forms a common surface, and the first and second guide heels 31, 32 comprises cut-outs 53a, 54a which can be seen as common cut-outs for the common surface. The two U-shaped connecting elements 60 are respectively arranged in the respective cut-out 53a, 54a such that the "U" of the connecting element 60 is inside the outer periphery of the third guide heel 39. At the ends of shanks of the connector element 60 are the locking lugs 33, 34 arranged such as they are protruding from the surface 31a, 32a of respective guide heel 31, 32, i.e. protruding from the common surface 31a, 32a, in an unloaded condition. Respective of the locking lugs 33, 34 are attached to distal ends of respective guide heel 31, 32 in a flexible manner, i.e. in a hinge-like manner, depending on material properties and thickness of the "hinge". When the resilient locking lugs 33, 34 are depressed they flex inwards in direction of the third guide heel 39. The flexibility is provided both by that the hinge-like attachment to the guide heels and also a certain flexibility in the shanks of the "U".

Fig. 10 shows a perspective view of the panels of Fig.2 with the fourth type of connector 30 according to the embodiment of Fig. 9 assembled into the recesses 11, 12 of the first panel 10. The second panel 20 is ready for interconnection with the first panel 10 by snap-connection in a similar way as described in detail in Fig. 4. The advantage with having all locking lugs arranged as resilient locking lugs is that the connectors 30 may be snapped into position in the recesses 11, 12 etc. as described for the third type of connector. When moving the second panel 20 towards the first panel 10, the resilient second locking lugs 34 will be depressed inwards such as the resilient locking lug 34 is fitted inside the outer periphery of the second guide heel 32. Then, the second locking lug 34 will spring out and snap into the second locking recess 22 in the same manner as other embodiments. As in the foregoing described embodiments the panels 10, 20 are disconnectable from each other with a tool. outer periphery of the second guide heel 32. Then, the second locking lug 34 will spring out and snap into the second locking recess 22 in the same manner as other embodiments. As in the foregoing described embodiments the panels 10, 20 are disconnectable from each other with a tool.

Reference to an element in the singular is not intended to mean "one and only one" unless explicitly so stated, but rather "one or more."

## Claims

1. Connector (30) for mechanical interconnection of a first panel (10) to a second panel (20) comprising:
a first guide heel (31) adapted for insertion into a first guiding recess (11) of the first panel (10), the first guide heel (31) having a first guiding direction (11a), and
a second guide heel (32) adapted for insertion into a second guiding recess (21) of the second panel (20), the second guide heel (32) having a second guiding direction (21a),
a first resiliently arranged locking lug (33) adapted for insertion into a first locking recess (12) arranged in the first guiding recess (11), the first locking lug (33) having a first locking direction (12a) which differs from the first guiding direction (11a),
a second resiliently arranged locking lug (34) adapted for insertion into a second locking recess (22) arranged in the second guiding recess (21), the second locking lug (34) having a second locking direction (22a) which differs from the second guiding direction (21a),
wherein the first locking lug (33) protruding from a surface (31a) of the first guide heel (31) in an unloaded condition, which is an opposite condition to a depressed condition of the resiliently arranged locking lug (33) and the second locking lug (34) protruding from a surface (32a) of the second guide heel (32) in an unloaded condition, which is an opposite condition to a depressed condition of the resiliently arranged locking lug (34), and the respective locking lug (33, 34) is resiliently arranged in the connector (30) and is depressible into the connector (30) when depressed such as the locking lug (33, 34) does not protrude from the surface (31a, 32a), **characterized by** that at least one of the locking lugs (33, 34) is arranged at a resilient tongue (53, 54) arranged in a cut-out (53a, 54a) in at least one of the first or the second guide heels (31, 32), **or by** that the first and second locking lugs (33, 34) are arranged at respective ends of a common u-shaped connecting element (60) of the connector (30), which connecting element (60) is flexibly arranged to the connector (30) between ends of the first guide heel (31) and the second guide heels (32).

2. Connector according to claim 1, wherein an angle (α) between the first and second guide heels (31, 32) are between 60 - 120°, preferably near 90°.

3. Connector according to claim 1, wherein an angle (β) between the first and second guide heels (31, 32) are between 150 - 210°, preferably near 180°.

4. A connection system for mechanical interconnection of panels, preferably for interconnecting furniture panels, comprising:
a first panel (10) having a main plane (10A) and a gable (10B), and the first panel (10) comprising a first guiding recess (11) with a first guiding direction (11a), the first guiding recess (11) comprising a first locking recess (12) with a first locking direction (12a) which differs from the first guiding direction (11a),
a second panel (20) having a main plane (20A) and a gable (20B), and the second panel (20) comprising a second guiding recess (21) with a second guiding direction (21a),**characterized by that** the second guiding recess (21) comprising a second locking recess (22) with a second locking direction (22a) which differs from the second guiding direction (21a),**and by that the connection system further comprising**
a connector (30) according to any of claims 1 - 3 for mechanical interconnection of the first panel (10) to the second panel (20).

## Patentansprüche

1. Verbinder (30) zum mechanischen Verbinden einer ersten Platte (10) mit einer zweiten Platte (20), umfassend:
einen ersten Führungsabsatz (31), der zum Einführen in eine erste Führungsaussparung (11) der ersten Platte (10) ausgeführt ist, wobei der erste Führungsabsatz (31) eine erste Führungsrichtung (11a) hat, und
einen zweiten Führungsabsatz (32), der zum Einführen in eine zweite Führungsaussparung (21) der zweiten Platte (20) ausgeführt ist, wobei der zweite Führungsabsatz (32) eine zweite Führungsrichtung (21a) hat,
eine erste federnd angeordnete Arretiernase (33), die zum Einführen in eine in der ersten Führungsaussparung (11) angeordnete erste Arretieraussparung (12) ausgeführt ist, wobei die erste Arretiernase (33) eine erste Arretierrichtung (12a) hat, die von der ersten Führungsrichtung (11a) verschieden ist,
eine zweite federnd angeordnete Arretiernase (34), die zum Einführen in eine in der zweiten Führungsaussparung (21) angeordnete zweite Arretieraussparung (22) ausgeführt ist, wobei die zweite Arretiernase (34) eine zweite Arretierrichtung (22a) hat, die von der zweiten Führungsrichtung (21a) verschieden ist,
wobei die erste Arretiernase (33) in einem unbelasteten Zustand, bei dem es sich um den entgegengesetzten Zustand zu einem niedergedrückten Zustand der federnd angeordneten Arretiernase (33) handelt, von einer Fläche (31a) des ersten Führungsabsatzes (31) vorragt und die zweite Arretiernase (34) in einem unbelasteten Zustand, bei dem es sich um den entgegengesetzten Zustand zu einem niedergedrückten Zustand der federnd angeordneten Arretiernase (34) handelt, von einer Fläche (32a) des zweiten Führungsabsatzes (32) vorragt und die jeweilige Arretiernase (33, 34) federnd in dem Verbinder (30) angeordnet und in den Verbinder (30) niederdrückbar ist, wenn sie niedergedrückt wird, so dass die Arretiernase (33, 34) nicht von der Fläche (31a, 32a) vorragt, **dadurch gekennzeichnet, dass** mindestens eine der Arretiernasen (33, 34) an einer federnden Zunge (53, 54) angeordnet ist, die in einem Ausschnitt (53a, 54a) in dem ersten und/oder dem zweiten Führungsabsatz (31, 32) angeordnet ist, oder dass die erste und die zweite Arretiernase (33, 34) an jeweiligen Enden eines gemeinsamen u-förmigen Verbindungselements (60) des Verbinders (30) angeordnet sind, wobei das Verbindungselement (60) flexibel an dem Verbinder (30) zwischen Enden des ersten Führungsabsatzes (31) und des zweiten Führungsabsatzes (32) angeordnet ist.

2. Verbinder nach Anspruch 1, wobei ein Winkel (α) zwischen dem ersten und dem zweiten Führungsabsatz (31, 32) zwischen 60 - 120°, vorzugsweise nahe 90°, liegt.

3. Verbinder nach Anspruch 1, wobei ein Winkel (ß) zwischen dem ersten und dem zweiten Führungsabsatz (31, 32) zwischen 150 - 210°, vorzugsweise nahe 180°, liegt.

4. Verbindungssystem zum mechanischen Verbinden von Platten, vorzugsweise zum Verbinden von Möbelplatten, umfassend:
eine erste Platte (10) mit einer Hauptebene (10A) und einem Giebel (10B), wobei die erste Platte (10) eine erste Führungsaussparung (11) mit einer ersten Führungsrichtung (11a)umfasst, wobei die erste Führungsaussparung (11) eine erste Arretieraussparung (12) mit einer ersten Arretierrichtung (12a) umfasst, die von der ersten Führungsrichtung (11a)verschieden ist,
eine zweite Platte (20) mit einer Hauptebene (20A) und einem Giebel (20B), wobei die zweite Platte (20) eine zweite Führungsaussparung (21) mit einer zweiten Führungsrichtung (21a) umfasst, **dadurch gekennzeichnet, dass** die zweite Führungsaussparung (21) eine zweite Arretieraussparung (22) mit einer zweiten Arretierrichtung (22a) umfasst, die von der zweiten Führungsrichtung (21a) verschieden ist, und dass das Verbindungssystem ferner Folgendes umfasst:
einen Verbinder (30) nach einem der Ansprüche 1 - 3 zum mechanischen Verbinden der ersten Platte (10) mit der zweiten Platte (20).

## Revendications

1. Connecteur (30) pour l'interconnexion mécanique d'un premier panneau (10) à un second panneau (20) comprenant :
un premier talon de guidage (31) conçu pour être inséré dans un premier évidement de guidage (11) du premier panneau (10), le premier talon de guidage (31) ayant une première direction de guidage (11a), et
un second talon de guidage (32) conçu pour être inséré dans un second évidement de guidage (21) du second panneau (20), le second talon de guidage (32) ayant une seconde direction de guidage (21a),
une première patte de verrouillage (33) disposée de manière élastique conçue pour être insérée dans un premier évidement de verrouillage (12) disposé dans le premier évidement de guidage (11), la première patte de verrouillage (33) ayant une première direction de verrouillage (12a) qui diffère de la première direction de guidage (11a),
une seconde patte de verrouillage (34) disposée de manière élastique conçue pour être insérée dans un second évidement de verrouillage (22) disposé dans le second évidement de guidage (21), la seconde patte de verrouillage (34) ayant une seconde direction de verrouillage (22a) qui diffère de la seconde direction de guidage (21a),
la première patte de verrouillage (33) faisant saillie d'une surface (31a) du premier talon de guidage (31) dans un état non chargé, qui est un état opposé à un état enfoncé de la patte de verrouillage (33) disposée de manière élastique et la seconde patte de verrouillage (34) faisant saillie d'une surface (32a) du second talon de guidage (32) dans un état non chargé, qui est un état opposé à un état enfoncé de la patte de verrouillage (34) disposée de manière élastique, et la patte de verrouillage (33, 34) respective étant disposée de manière élastique dans le connecteur (30) et pouvant être enfoncée dans le connecteur (30) lorsqu'elle est enfoncée de sorte que la patte de verrouillage (33, 34) ne fasse pas saillie de la surface (31a, 32a), **caractérisé en ce qu'**au moins une des pattes de verrouillage (33, 34) est disposée au niveau d'une languette élastique (53, 54) disposée dans une découpe (53a, 54a) dans au moins un des premier et second talons de guidage (31, 32), ou **en ce que** les première et seconde pattes de verrouillage (33, 34) sont disposées aux extrémités respectives d'un élément de connexion (60) en forme de U commun du connecteur (30), lequel élément de connexion (60) est disposé de manière flexible sur le connecteur (30) entre les extrémités du premier talon de guidage (31) et du second talon de guidage (32).

2. Connecteur selon la revendication 1, un angle (α) entre les premier et second talons de guidage (31, 32) étant compris entre 60 et 120°, de préférence proche de 90°.

3. Connecteur selon la revendication 1, un angle (β) entre les premier et second talons de guidage (31, 32) étant compris entre 150 et 210°, de préférence proche de 180°.

4. Système de raccordement pour l'interconnexion mécanique de panneaux, de préférence pour l'interconnexion de panneaux de meubles, comprenant :
un premier panneau (10) ayant un plan principal (10A) et un pignon (10B), et le premier panneau (10) comprenant un premier évidement de guidage (11) avec une première direction de guidage (11a), le premier évidement de guidage (11) comprenant un premier évidement de verrouillage (12) avec une première direction de verrouillage (12a) qui diffère de la première direction de guidage (11a),
un second panneau (20) ayant un plan principal (20A) et un pignon (20B), et le second panneau (20) comprenant un second évidement de guidage (21) avec une seconde direction de guidage (21a), **caractérisé en ce que** le second évidement de guidage (21) comprend un second évidement de verrouillage (22) avec une seconde direction de verrouillage (22a) qui diffère de la seconde direction de guidage (21a), et **en ce que** le système de raccordement comprend en outre
un connecteur (30) selon l'une quelconque des revendications 1 à 3 pour l'interconnexion mécanique du premier panneau (10) au second panneau (20).
